Europäisches Patentamt

European Patent Office

Office européen des brevets

(19)

(11) Veröffentlichungsnummer: **0 013 907**
A1

# (12) EUROPÄISCHE PATENTANMELDUNG

(21) Anmeldenummer: 80100107.4

(22) Anmeldetag: 10.01.80

(51) Int. Cl.³: **F 03 B 11/02,** F 03 B 3/04

(30) Priorität: 18.01.79 AT 384/79

(43) Veröffentlichungstag der Anmeldung: 06.08.80
Patentblatt 80/16

(84) Benannte Vertragsstaaten: **CH DE FR IT**

(71) Anmelder: **Maschinenfabrik Andritz Aktiengesellschaft, Reichstrasse 66, A-8045 Graz (AT)**

(72) Erfinder: **Buchelt, Benno, Dipl.-Ing., Freiligrathstrasse 22, A-9020 Klagenfurt (AT)**

(74) Vertreter: **Gödl, Oswald, Reichsstrasse 66, A-8045 Graz (AT)**

(54) **Wasserturbine.**

(57) Bei dieser Wasserturbine handelt es sich um eine mit zwei oder mehreren hintereinander angeordneten Turbinenstufen, welche in einfacher Weise für eine Serienfertigung erstellbar ist und die Anpassung an verschiedene Wassermengen und verschiedene Gefälle durch Veränderung der Stufenzahl ermöglicht.

Zwecks einfacher Herstell- und Austauschbarkeit besteht die Wasserturbine aus einem rohrförmigen Gehäuseteil (2) mit Leitschaufeln (4) und wenigstens je einem Läuferteil (3) mit Laufschaufeln (5), die in axialer Richtung unmittelbar aufeinanderfolgende und austauschbare Abschnitte (1) bilden, aus denen die Turbine zusammengesetzt ist.

- 1 -

Wasserturbine

Die Erfindung bezieht sich auf eine Wasserturbine mit zwei oder mehreren, hintereinander angeordneten Turbinenstufen. Es sind bereits verschiedene Ausführungsformen von Wasserkraftmaschinen bekannt geworden, die die Hintereinanderanordnung von mehreren Turbinensätzen vorsehen. Bei einer dieser Ausführungen sind in einem zylindrischen Gehäuse Flügelräder mit Abstand voneinander auf einer Welle angeordnet. Eine derartige Wasserkraftmaschine kann nur die kinetische Energie eines strömenden Flusses ausnützen und keinen zusätzlichen Überdruck, der in einer Druckrohrleitung mit Gefälle zugeführt wird. Für die Mehrstufigkeit besteht hier infolge der geringen kinetischen Energie eines Wasserteilchens in einem strömenden Fluß kein Anlaß. Bei dieser Ausgestaltung sind keine Leiträder bzw. Leitschaufeln vorgesehen, wodurch ein nach jedem Laufrad größer werdender Drall entgegen der Drehrichtung erzeugt wird, so daß die Laufräder alle ungleiche Schaufelwinkel haben müssen und schließlich die Strömung drallbehaftet die Turbinenröhre verläßt. Der Drall hinter der Turbine verzehrt einen Teil der vorne eingetretenen kinetischen Energie zusätzlich zu den sowieso bei jeder Strömungsmaschine vorhandenen Reibungsverlusten, so daß der

0013907

Wirkungsgrad einer derartigen Anlage sehr
schlecht wird.

Ferner ist eine Turbinenanlage bekannt, bei
der die Turbinen auf einer oder mehreren gemeinsamen Wellen übereinander in verschiedenen
Höhen angeordnet sind und die auf derselben
Welle sitzenden Turbinen zusammengekuppelt
werden. Zur beliebigen Verteilung der zugeführten Wasserkraft sind die Turbinen der
Anlage einerseits durch absperrbare Leitungen
hintereinander geschaltet und andererseits
durch ebenfalls absperrbare Leitungen unmittelbar mit dem Wasserbecken verbunden. Es
sind hier wohl verschiedene Turbinen parallel
bzw. in Serie geschaltet, doch handelt es sich
stets immer noch um Einzelmaschinen, welche
durch ein kompliziertes Leitungssystem mit
Zwischenbehältern zur Regelung der Leitung
verbunden werden müssen.

Ferner ist eine mehrstufige Pumpturbine bekannt geworden, welche mit in Stromrichtung
aufeinanderfolgenden, an einer gemeinsamen
Welle arbeitenden Stufen versehen ist. Diese
einzelnen Stufen werden mittels Ringschieber
und Wellenkupplungen zu- und abgeschaltet.

Bei einer weiteren bekannten Ausgestaltung
einer Turbinenanlage sind in einem oder zwei-
oder mehrfach gekrümmten Rohr eine oder
mehrere Turbinen enthalten. Es kommt hier im
wesentlichen auf die Rohrkrümmungen an. Diese
ermöglichen ein geradliniges Herausführen
einzelner Wellen zu einzelnen, voneinander

- 3 -

0013907

unabhängigen Arbeitsmaschinen.

Die vorliegende Erfindung hat sich zur Aufgabe gestellt, eine Wasserturbine zu schaffen, welche in einfacher Weise für eine Serienfertigung geeignet ist, wobei eine in konstruktiver Hinsicht einfache Anpassung an verschiedene Wassermengen und verschiedene Gefälle möglich sein soll.

Erfindungsgemäß wird hierzu vorgeschlagen, daß die Wasserturbine aus zwei oder mehreren, aus wenigstens je einem rohrförmigen Gehäuseteil mit Leitschaufeln bestehenden, jeweils einen Turbinensatz bildenden, in axialer Richtung unmittelbar aufeinanderfolgenden und untereinander austauschbaren Abschnitten zusammengesetzt ist.

Durch diese erfindungsgemäßen Maßnahmen kann in einem Baukastensystem bei ein- und derselben Drehzahl und ein- und derselben Flüssigkeitsmenge durch die Stufenzahl, welche aus vorrätigen Einheitsstufen zusammengesetzt ist, eine Anpassung an ein bestehendes Gefälle erfolgen. Für die Serienfertigung ist eine derartige Ausbildung von wesentlicher Bedeutung, da eine Vielzahl gleicher Teile in großen Serien gefertigt werden können, so daß die Herstellungskosten einer derartigen Wasserturbine sehr niedrig zu stehen kommen.

Weitere erfindungsgemäße Merkmale und besondere Vorteile werden in der nachstehenden Beschreibung anhand der Zeichnungen noch

- 4 -  0013907

näher erläutert. Es zeigen

Fig. 1 einen Schnitt durch eine erfindungsgemäße, dreistufige Wasserturbine

Fig. 2 einen Querschnitt durch die Turbine

Fig. 3 die Hälfte eines Läuferteiles im Schnitt dargestellt

Fig. 4 einen Bauteil, aus welchem die Leit- und Laufschaufeln gefertigt werden

Fig. 5 einen Schnitt durch eine Hälfte eines Läuferteiles mit einstückig angeformter Laufschaufel

Fig. 6 einen Schnitt durch die Hälfte eines Läuferteiles in einer konstruktiv anderen Ausführungsform

Fig. 6a eine schematische Draufsicht auf die Lauf- und Leitschaufeln der Ausführungsform gemäß Fig. 6

Fig. 7 einen Längsschnitt durch eine zweite Ausführungsform einer Turbine

Fig. 8 und 9 schematisch dargestellt Regelungsmöglichkeiten einer Turbine gemäß Fig. 7

Fig. 9a eine montierte Turbine gemäß der Ausgestaltung in Fig. 7

Fig. 10 bis 13 in schematischer Darstellung verschiedene Anbringungs- und Kombinationsvarianten einer erfindungsgemäßen Wasserturbine.

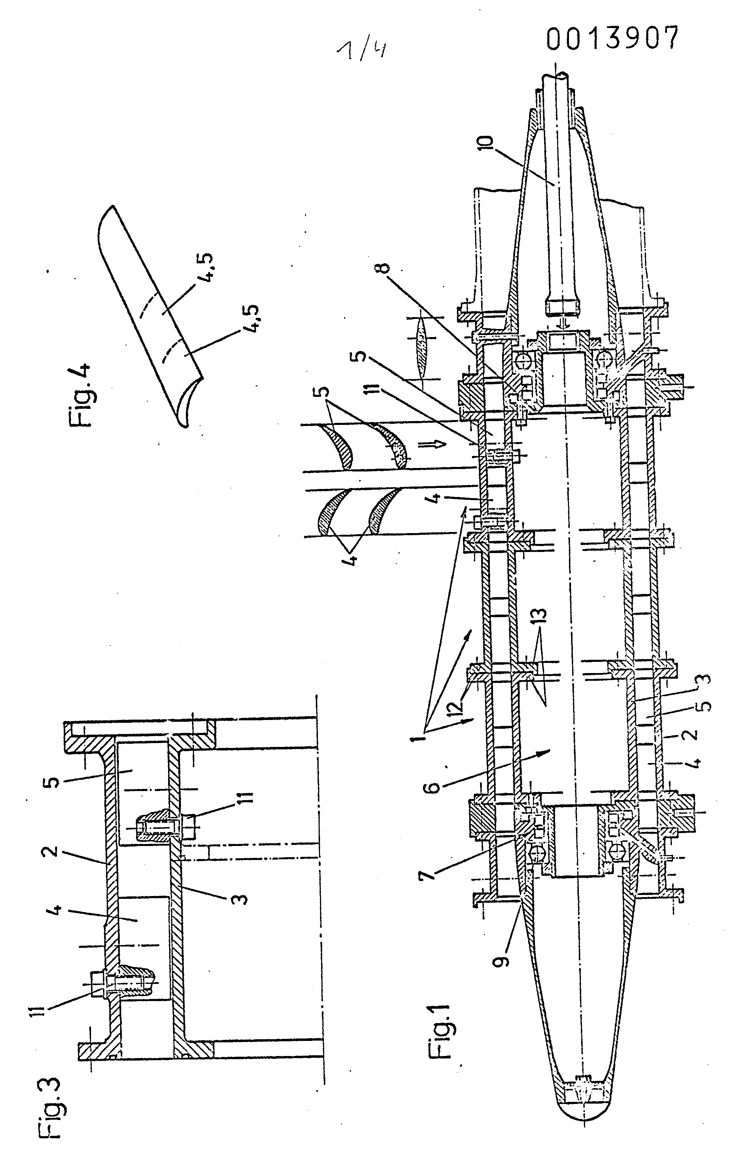

Bei der Ausführungsform nach Fig. 1 ist die Wasserturbine als z.B. dreistufige Axialturbine ausgebildet, wobei die drei Stufen jeweils einen Turbinensatz bilden. Diese drei Stufen sind, wie auch der Zeichnung zu Fig. 1 entnommen werden kann, genau gleich ausgestaltet und sind daher untereinander austauschbar. Es werden also untereinander gleiche Abschnitte 1 in axialer Richtung unmittelbar aufeinanderfolgend miteinander verbunden. Jeder dieser Abschnitte 1 besteht aus einem rohrförmigen Gehäuseteil 2 und einem Läuferteil 3, wobei am Gehäuseteil 2 Leitschaufeln 4 und am Läuferteil 3 Laufschaufeln 5 angeordnet sind. Der aus drei Läuferteilen 3 gebildete Läufer 6 ist an seinen Endbereichen mit einem Lagerteil 7 und 8 verbunden. Diese Lagerteile 7 und 8 sind entsprechend der Anzahl der Abschnitte 1 mehr oder weniger weit auseinander gerückt. Der in Strömungsrichtung hintere Lagerbock erhält ein radiales Führungslager 9, welches kaum belastet ist und für alle Stufen gleich bleibt. Auch der vordere Lagerteil 8 bleibt bis zu einer axialkräftemäßig vertretbaren Stufenzahl der gleiche, um dann bei höherer Stufenzahl ein verstärktes Lager aufzunehmen. Bei kleinen Turbinen sind die Lagerteile vorn und hinten vollkommen spiegelbildlich und mit einer geringfügigen Montageänderung untereinander austauschbar. Durch eine Steckwelle 10 wird der Läufer 6 mit dem entsprechenden Generator verbunden.

0013907

Die Läuferteile 3 und somit der Läufer 6 sind als Hohlkörper ausgeführt, was auch aus Gewichtsgründen sehr wesentlich ist. Ferner ist der Läufer auch aus Montagegründen hohl ausgeführt, da die Schraubflansche der Läuferteile innen liegen und auch die Schaufeln bei diesem Beispiel radial von innen angeschraubt sind. Ein voller Läufer wäre nur dann denkbar, wenn es sich um eine Kleinausführung einer Wasserturbine handelt, wobei dann die Läuferteile durch einen zentralen Schraubenzuganker zusammengehalten werden können. Der axiale Zuganker ist bei hohlen Läufern auch dann vorgesehen, wenn infolge kleiner Abmessungen eine Montage der innen liegenden Flansche nicht mehr möglich ist. In gleicher Weise wie die Laufschaufeln 5 sind auch die Leitschaufeln 4 durch Schrauben 11 mit den Gehäuseteilen 2 verbunden.

Die Gehäuseteile 2 und die Läuferteile 3 weisen radial ausgerichtete Flansche 12 bzw. 13 auf, so daß eine sehr einfache Montage der einzelnen Abschnitte 1 erfolgen kann. An diesen Flanschen, welche zweckmäßigerweise zusätzlich Zentrierringe aufweisen, kann mittels Schrauben eine gegenseitige Befestigung der Abschnitte 1 erfolgen.

Verglichen mit den üblichen bisher ausgeführten Axial-Wasserturbinen ist hier das große Nabenverhältnis von wesentlicher Bedeutung. Es ist dies das Verhältnis des Nabenradius zum Innenradius des Gehäuses, also das Verhältnis der Radien des Kreisringquerschnittes der senkrecht zur Maschinenachse durchflossenen Fläche. Im allgemeinen verspricht man sich von einem kleinen Nabenverhältnis (etwa 0,5 bis 0,6) einen besseren Wirkungsgrad, weil dann das Verhältnis der benetzten Oberfläche zur Durchflußmenge kleiner ist. Andererseits ist bei allen Strömungsmaschinen für Gase und für Flüssigkeiten axialer Bauart eine gewisse Mindestgröße der Nabe aus hydro- oder aerodynamischen Gründen deshalb erforderlich, weil die Kanäle zwischen den radial sternförmig nach innen zusammenlaufenden Schaufeln an der Schaufelwurzel am stärksten gekrümmt sein müssen. dieser ungünstige Bereich wird also durch eine entsprechend große Nabe ausgeklammert, wobei wegen dem zuerst angeführten Grund der empirisch belegte Kompromißzahlenwert von etwa 0,5 bis 0,6 zustandekommt. Bei der vorliegenden Konstruktion ist ein Nabenverhältnis von mindestens 0,7 gegeben, und zwar aus den nachstehend angeführten Gründen: Nur im Zusammenhang mit großem Nabenverhältnis und bei Reaktionsgrad 0,5 auf einem mittleren Radius ergibt sich bei einer Auslegung "Reaktionsgrad = konstant über dem Radius" eine fast zylindrische Leit- und Laufradschaufel. Bei einem Nabenverhältnis größer als 0,7 kann man daher die Schaufeln mit sehr guter Näherung bei dieser Art von Auslegung rein zylindrisch gestalten, d.h. ohne die sonst übliche räumliche Verwindung um eine radiale Schwerachse der Schaufelprofile auf verschiedenen Radien. Neben einer einfachen Schaufelfertigung bringt die genannte Auslegung auch bestmögliche Stufenwirkungsgrade.

Die praktisch zylindrische Schaufel ist nicht nur ein Zugeständnis an eine einfache Fertigungstechnik. Sie wird im Zusammenhang mit dem großen Nabenverhältnis und einen Reaktionsgrad 0,5 erstmals bei Wasserturbinen angewandt. Diese Anwendung ist nur bei einer mehrstufigen Maschine im allgemeinen sinnvoll, da Axialmaschinen nur mit einer Stufe bei den sonst üblichen relativ hohen Gefällen pro Stufe (z. B. über 40 m) bei nur schwachen Schaufelprofilkrümmungen zusammen mit dem Wunsch nach drallfreiem Austritt mit einem Reaktionsgrad auf dem Mittelradius von über 0;85 ausgeführt werden (üblicher Wert für Kaplan-Turbinen), also weit entfernt vom Wert 0,5.

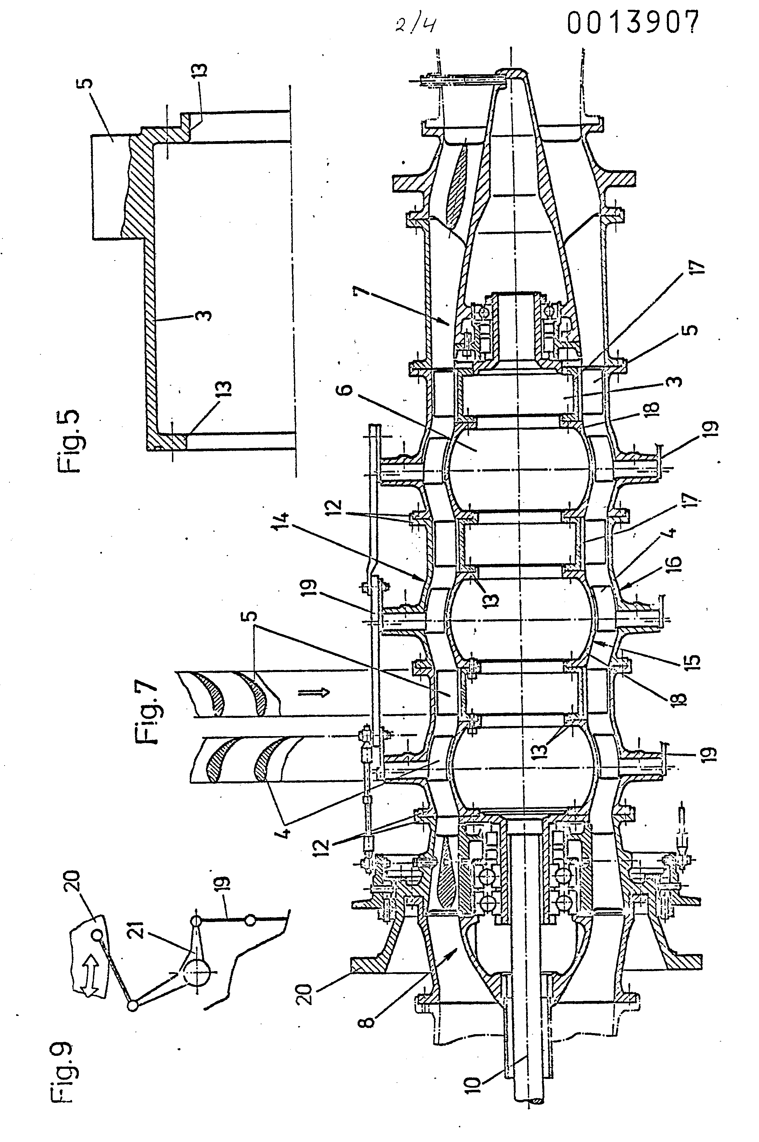

Für Kleinserien können die Schaufeln aus zylindrischem Stangenmaterial gefertigt werden. Sie können dann radial an dem Gehäuse oder an dem Läufer angeschraubt, angelötet oder angeschweißt werden. Es wird diesbezüglich auch auf die Fig. 3 bis 6 verwiesen. Im Falle der geschraubten Schaufeln ist auch ein Auswechseln bei einer Beschädigung möglich.

Für Großserienfertigung kommt jedoch eher ein Gußverfahren in Frage, bei welchem eine mehrfach geteilte Form eingesetzt wird, so daß der Läuferteil und die Schaufeln in einem Stück gegossen werden können. Dabei kann die Laufschaufel räumlich auch verwunden sein, ohne die Fertigungskosten zu erhöhen. Bei einer einstückigen Gußausführung ist also eine räumlich verwundene Laufschaufel durchaus denkbar.

Das große Nabenverhältnis ermöglicht besonders kurze Schaufeln mit relativ geringen Biegekräften durch die Strömungsablenkung an der Schaufelwurzel und daher ergibt sich die Möglichkeit der radialen Schraubverbindung an dem rotierenden Läufer oder im stillstehenden Gehäuse. Die von außen nach innen fliegende Lagerung der Leitschaufeln wird durch das große Nabenverhältnis erst möglich.

Wegen der geringen Biegebeanspruchung an der Schaufelwurzel im Zusammenhang mit großem Nabendurchmesser und der Vielstufigkeit, wenn also ein und dasselbe Gefälle auf mehrere Stufen aufgeteilt wird, anstatt es in einer einzigen Stufe abzuarbeiten, sind auch die Strömungsumlenkkräfte pro Stufe geringer. Der Gesamtwirkungsgrad mehrerer Axialstufen hintereinander ist immer besser wie der einer einzigen Stufe für das gleiche Gefälle.

Durch die besondere Ausgestaltung ist es auch möglich, die Laufschaufeln bzw. Leitschaufeln aus Kunststoff zu fertigen oder auch mit einem Kunststoffüberzug zu versehen. Diese Schaufeln könnten sich bei sandhaltigem Wasser gegen Abrieb wegen der Deformationsfähigkeit der Oberflächenerhebungen besser bewähren als Metallschaufeln. Eine Fertigung aus Kunststoff käme dann in Frage, wenn diese als einzelner Spritzgußteil oder als ganzer Schaufelkranz gleich um den Metalläufer herum gegossen werden. Eine derartige Ausgestaltung wäre auch relativ billig.

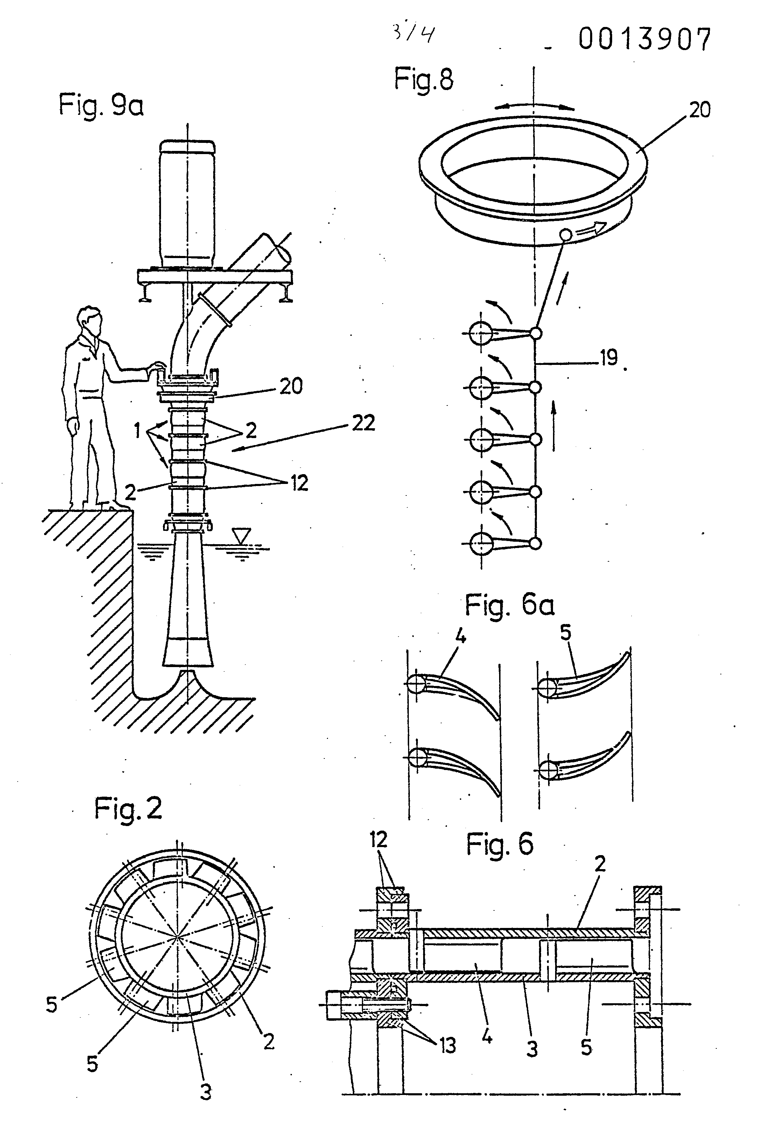

In den Fig. 6 und 6a ist eine besondere Ausführungsform von Läuferteilen 3 und Gehäuseteilen 2 gezeigt. Es handelt sich hier um eine Schweiß- oder Lötkonstruktion, wobei also die rohrförmigen

- 10 -

0013907

Teile und die Flansche miteinander verschweißt oder verlötet sind. Auch die Laufschaufeln sowie die Leitschaufeln sind durch
Schweißung oder Lötung mit den entsprechenden
Teilen verbunden. Die Leitschaufeln 4 und die
Laufschaufeln 5 sind ebenfalls aus einer
Blechkonstruktion gefertigt. Gerade bei kleinsten Serien dürfte sich eine derartige Anordnung bewähren.

Bei der Ausführungsform einer Wasserturbine
gemäß Fig. 7 sind die Leitschaufeln drehbar,
was sphärische Ausbuchtungen des Meridians
für gleichbleibenden Leitschaufelspalt erfordert. Damit das Gehäuse 14 nicht in der
Ebene der radialen Leitschaufeldrehzahlen
aus Montagegründen geteilt sein muß, ist
die sphärische Ausbuchtung nur laufradseitig
von der Ebene der Leitschaufeldrehachsen
aus gesehen vorhanden und erstrecken sich die
Leitschaufeln von der Drehachse aus in erster
Linie laufradseitig. Daher kann der Nabenteil
nach Montage der Leitschaufeln in einem ungeteilten Gehäuse axial eingeschoben werden.
Bei dieser Ausgestaltung ist noch zu vermerken, daß jeder Läuferteil 3 aus zwei getrennten, miteinander in gleicher Weise wie
die einzelnen Läuferteile verbindbaren Abschnitten 17 und 18 gebildet ist, wobei sich
an einen zylindrischen, die Laufschaufeln 5
tragenden Abschnitt 17 der die bogenförmige
Ausbuchtung 15 aufweisende Abschnitt 18 anschließt.

Wie aus den Fig. 7 bis 9 entnommen werden
kann, können bei dieser Anordnung die Leitschaufeln 4 um eine radiale Achse verschwenkbar am Gehäuse 14 gehalten sein. Die Leitschaufeln 4 sind dann über achsparallele Zugstangen 19 verstellbar. Die Verstellung erfolgt durch Verdrehen eines einzigen Leitringes 20. Bei der Ausführungsform gemäß Fig. 9 ist noch ein Zwischenhebel 21 vorgesehen, um dadurch eine Ausführung zu schaffen, welche größere Verschwenkwinkel für die Leitschaufeln 4 zuläßt.

Anhand der Zeichnungen wurden zwei Ausführungsbeispiele von mehrstufigen axialen Wasserturbinen aufgezeigt, wobei im Rahmen der Erfindung selbstverständlich verschiedene konstruktive Abweichungen möglich sind. Die Form des Läufers und des Gehäuses kann selbstverständlich in entsprechenden Grenzen variiert werden. Auch ist es dankbar, den jeweils einen Abschnitt bildenden Gehäuseteil ebenfalls zwei- oder mehrteilig auszugestalten, was insbesondere dann denkbar wäre, wenn eine vereinfachte Montagemöglichkeit sich dadurch ergeben würde. Die Gestaltung der Lagerteile, der Eintritts- und der Austrittsöffnung der Wasserturbine sowie die Anordnung von Stützrippen kann selbstverständlich auf verschiedene Art und Weise erfolgen.

Bei der vorliegenden Erfindung wird also eine einfache Wasserturbine geschaffen, welche besonders für die Serienfertigung geeignet ist, welche auch an verschiedene Wassermengen und Gefälle angepaßt werden kann und zwar durch Zusammenschrauben einzelner Bauelemente bei der Montage. Es erfolgt

0013907

also eine Anpassung im vorhinein und nicht durch nachträgliche Verstellungen und Stillsetzen einzelner Elemente an der bereits zusammengebauten Maschine. Zwar ist auch an den Einsatz einer Wasserturbine mit verstellbaren Leitschaufeln gedacht (siehe Ausführungsform gemäß Fig. 7), jedoch ist bekannt, daß eine Axial-Wasserturbine mit starren Laufradschaufeln sich nur innerhalb weniger Prozente der Nennleistung verlustfrei mit verstellbaren Leitschaufeln regeln läßt. Die vorgeschlagene Version gemäß Fig. 7 soll auch nur innerhalb weniger Prozente von ihrer Nennleistung geregelt werden und zwar möglicherweise im Verbund mit rund zehn Maschinen der Version gemäß Fig. 1, bei einem von einem großen Netz unabhängigen sogenannten Inselbetrieb. Bei einem solchen Inselbetrieb würde die Belastungsregelung des Inselnetzes so erfolgen, daß die Wasserturbinen gemäß Fig. 1, die wegen ihrer starren Leit- und Laufschaufeln aus Wirkungsgradgründen entweder laufen oder stillgesetzt sind, von einer elektronischen Regelung stufenweise zu- und abgeschaltet werden. Der stufenförmige Leistungssprung, der dabei entsteht, wird von der Führungsturbine vom Typ Fig. 7 überbrückt mit Hilfe der verstellbaren Leitschaufeln. Es gilt als bekannte Regel für einen Inselnetzbetrieb, daß die Leistung der Führungsturbine etwa gleich groß sein soll, wie die der geführten Turbine. Ist die Leistung der Führungsturbine z.B. etwa zehn mal so groß, wie die der einzeln geführten, dann kann sie im Verbund mit etwa zehn abhängigen Turbinen laufen. Wird wegen

- 13 -                                    0013907

Belastungsrückgang des Netzes z.B. eine
starre abhängige Turbine vom Typ Fig. 1
automatisch abgeschalten, dann geht die
Netzleistung um 1/20, d.h. um 5 % zurück,
so daß der Regelbereich der Führungsturbine vom Typ Fig. 7 tatsächlich innerhalb
weniger Prozente liegt. Dadurch kommt der
Nachteil starrer Laufschaufeln nicht zum
Vorschein, nämlich der starke Wirkungsgradabfall bei stärkerer Leitschaufelverstellung.

Dieser soeben geschilderte Inselbetrieb
würde räumlich so aussehen, daß die einzelnen Maschinen an den verschiedenen Bächen
eines Seitentales aufgestellt sind und mit
einer Ringleitung über mehrere Kilometer
miteinander verbunden sind. Die Ausführung
mit verstellbaren Leitschaufeln ist wegen
der nur beschränkten verlustfreien Regelbarkeit hauptsächlich als Führungsturbine
in geringer Stückzahl für den geschilderten
Inselbetrieb gedacht, wo der notwendige
Regelbereich sehr klein ist.

Für die Ausführung gemäß Fig. 1 kommt nicht
nur der soeben geschilderte Inselbetrieb zusammen mit einer Führungsturbine vom Typ der
Fig. 7 in Frage, sondern auch der sogenannte
Schleppbetrieb, d.h. der Asynchrongenerator
speist in ein vorhandenes Großnetz ein und
wird von diesem frequenzgeregelt, d.h. erhält von diesem sein Drehfeld. Dann ist keine
Feinregelung der Wasserturbine erforderlich.
Ein System von solchen netzabhängigen, extrem
einfachen Kleinturbinen könnte auf diese Art
die Großkraftwerke entlasten.

Der Besitzer einer Wasserturbine vom Typ
der Fig. 1, welche am Netz hängt, bezieht
seinen eigenen Strom nicht direkt von seiner
Turbine, sondern vom allgemeinen Netz, wie
jeder andere Verbraucher auch. Er kann jedoch
mittels Zähler seinen an das Netz gelieferten
Strom der Elektrizitätsgesellschaft verrechnen. Der volkswirtschaftliche Nutzen liegt
darin, daß die Großkraftwerke entlastet
werden können. Die Aufstellung einer einzelnen, vom Netz unabhängigen Wasserturbine vom Typ der Fig. 1 für den direkten
Stromverbrauch ohne Regelung kann für gewisse Zwecke gleichfalls sinnvoll sein,
z.B. für Heiz- und Beleuchtungszwecke, wofür eine genaue Frequenzhaltung nicht erforderlich ist.

Für ein kompaktes Baukastensystem ohne
überflüssige Teile und für geringmöglichste
Teilezahl überhaupt kommt nur die mehrstufige Axialturbine in Frage, im Gegensatz
zur Pelton- und zur Francis-Turbine. Die
Axialturbine ist wegen der zahlreichen
Wiederholbarkeit aller Teile bei mehrstufiger Ausführung auch am besten für die
Serienfertigung geeignet.

Eine einfache Wasserturbine hat nur dann
einen Sinn, wenn sie einen kostengünstigen
Generator antreibt. Die Asynchronmotoren
zählen zu den billigsten elektrischen Maschinen, welche wegen ihrer einfachen Bauart in Großserie erzeugt werden und außerdem noch weitgehend genormt sind. Wenn man
einen Asynchronmotor über die der Frequenz des Erregerfeldes entsprechende Drehzahl hinaus antreibt, dann wird bekanntlich der Motor zum Generator. Diese Eigenschaft kann bei einer Wasserturbine gemäß der vorliegenden Erfindung ohne Getriebe ausgenützt werden und dadurch wird ein billiger, bereits in Großserie auf dem Markt befindlicher elektrischer Maschinentyp auf einfachste Art zur Energieerzeugung zugänglich gemacht. Die Drehzahlen dieser Maschinen liegen in Abhängigkeit der Polpaarzahl (2, 4, 6, 8) und der genormten Frequenz (50 Hz) fest: 3 000, 1 500, 1000 und 750 U/min. Für eine direkte Koppelung ohne Getriebe muß die Wasserturbine eine dieser Drehzahlen erreichen. Wenn man auch noch an den Leistungsbereich dieser genormten Asynchronmaschinen denkt, der gegenwärtig zwischen etwa 0,5 bis 200 kW liegt und mit Hilfe des Begriffes "spezifische Drehzahl" Überlegungen anstellt, welche grundsätzliche Wasserturbinentype (Axialrad, Francisrad, Peltonrad) am besten für diesen Leistungsbereich 0,5 bis 200 kW und diesen Leistungsbereich von 750 bis 1 500 U/min. geeignet sei, dann kommt man auf die erfindungsgemäße mehrstufige Axialturbine. Nur die mehrstufige Axialturbine ermöglicht in diesem speziellen Leistungsbereich der genormten Asynchronmotoren so hohe Drehzahlen, daß kein Getriebe notwendig ist.

In Fig. 9a ist gezeigt, wie eine erfindungsgemäße Wasserturbine 22 angeordnet werden kann. Es ist hier auch ein Größenvergleich einer 100 kW-Anlage mit einer Person ersichtlich, so daß allein daraus entnommen werden

0013907

kann, daß für derartige Wasserturbinen nur ein geringer Platzbedarf gegeben ist und daher eine Aufstellung überall im Gelände möglich ist ohne dabei den Umweltgedanken zu vernachlässigen. Aus dieser Fig. 9a ist auch ersichtlich, daß durch die Vielstufigkeit das Gefälle pro Stufe und damit die Kavitationsgefahr weitgehend abgesenkt werden kann. Dadurch ist eine positive Saughöhe auch bei hohen Gefällen möglich, z.B. rund 2,9 m Saughöhe beim Wasserturbinentyp gemäß Fig. 7 bei 100 m Effektivgefälle am Turbineneintritt im Falle 5-stufiger Ausführung. Eine einstufige Kaplanturbine müßte bei einem solchen Gefälle bereits rund 60 m unter dem Unterwasserspiegel sein, um eine Kavitation zu vermeiden. Das bedeutet jedoch einen großen Betonbauaufwand.

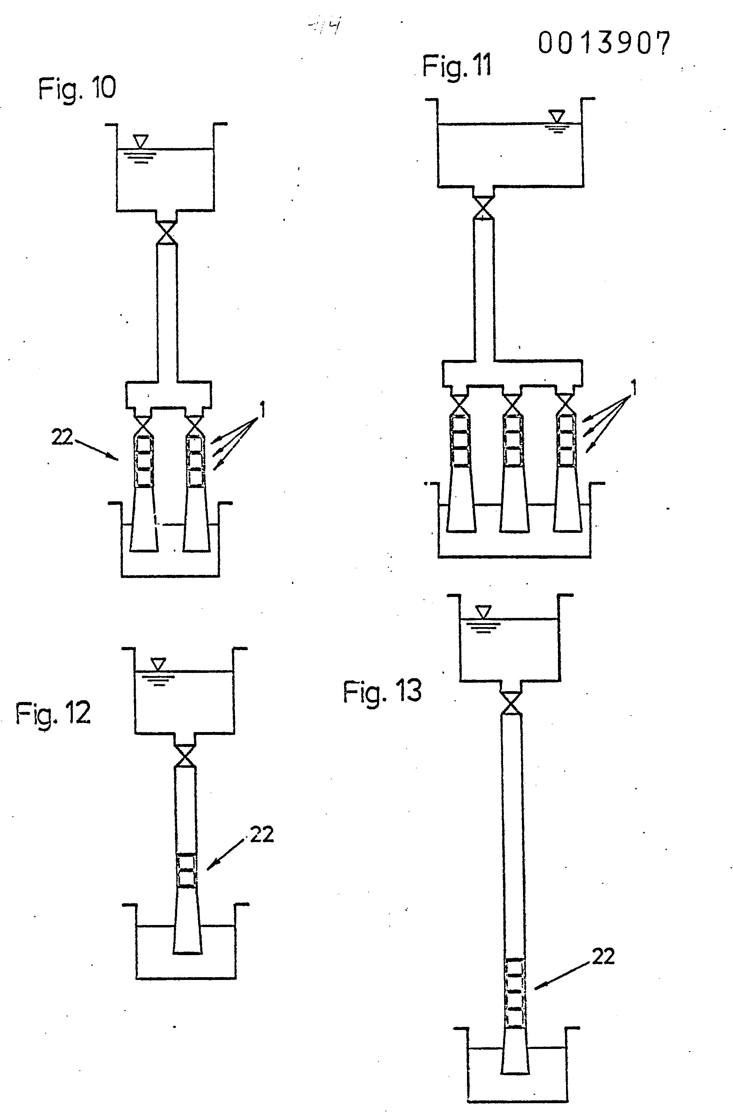

In den Fig. 10 und 11 sind Möglichkeiten aufgezeigt, wie eine Turbinenanlage gemäß der vorliegenden Erfindung einer entsprechenden Wassermenge angepaßt werden kann. Es werden dann zwei oder mehrere Wasserturbinen parallel zueinander geschaltet, welche je nach Bedarf zu- oder abgeschaltet werden. Für eine Anpassung an eine besondere Höhe, also ein besonderes Gefälle wird eine besondere Anzahl von Stufen bei den einzelnen Wasserturbinen gewählt, wie den Fig. 12 und 13 entnommen werden kann. Es sind hier einige Ausführungsmöglichkeiten gezeigt zur Anpassung an die Wassermenge und zur Anpassung an das Gefälle. Es wäre auch denkbar, durch Drehzahländerung Wassermenge und Gefälle zu variieren, wobei die Drehzahl zwischen den Norm-

0013907

drehzahlen 750, 1 000, 1 500 und 3 000 U/min. springt, wenn ein vorhandenes Leistungsnetz das Erregerfeld liefert, oder im Falle des selbsterregten netzunabhängigen Asynchrongenerators, wenn man Wert auf eine genormte Frequenz legt.

Wesentlich und wichtig bei allen diesen Überlegungen ist jedoch die erfindungsgemäße Ausgestaltung der Mehrstufigkeit, nämlich die einfache Zusammensetzbarkeit mehrerer untereinander austauschbarer Stufen zur Bildung einer Wasserturbine. Es können dadurch auch Kleinkraftwerke für entlegene Gebiete mit einem relativ geringen Kostenaufwand ver-wirklicht werden.

Patentansprüche                                    0013907

1. Wasserturbine mit zwei oder mehreren, hintereinander angeordneten Turbinenstufen, dadurch gekennzeichnet, daß die Wasserturbine aus zwei oder mehreren, aus wenigstens je einem rohrförmigen Gehäuseteil (2) mit Leitschaufeln (4) und wenigstens je einem Läuferteil (3) mit Laufschaufeln (5) bestehenden, jeweils einen Turbinensatz bildenden, in axialer Richtung unmittelbar aufeinanderfolgenden und untereinander austauschbaren Abschnitten (1) zusammengesetzt ist.

2. Wasserturbine nach Anspruch 1, dadurch gekennzeichnet, daß der aus zwei oder mehreren Läuferteilen (3) zusammengesetzte Läufer (6) an seinen Endbereichen mit einem Lagerteil (7, 8) verbunden ist.

3. Wasserturbine nach den Anspruchen 1 und 2, dadurch gekennzeichnet, daß der Läufer (6) als Hohlkörper ausgeführt ist.

4. Wasserturbine nach den Ansprüchen 1 und 3, dadurch gekennzeichnet, daß die Laufschaufeln (5) bzw. die Leitschaufeln (4) mittels im wesentlichen in radialer Richtung die Läuferteile (3) bzw. die Gehäuseteile (2) durchdringenden Schrauben (11) befestigt sind.

5. Wasserturbine nach Anspruch 1, dadurch gekennzeichnet, daß die Gehäuseteile (2) und die Läuferteile (3) radial ausgerichtete Flansche (12) bzw. (13) zur gegenseitigen Verschraubung aufweisen.

0013907

6. Wasserturbine nach den Ansprüchen 1 bis 5, dadurch gekennzeichnet, daß im Läufer (6) anstelle der Flansche (13) ein zentraler Schraubenzuganker vorgesehen ist.

7. Wasserturbine nach den Ansprüchen 1 bis 6, dadurch gekennzeichnet, daß das Verhältnis des Nabenradius zum Innenradius des Gehäuses (Nabenverhältnis) größer als 0,7 ist.

8. Wasserturbine nach den Ansprüchen 1 und 4, dadurch gekennzeichnet, daß die Laufschaufeln (5) und die Leitschaufeln (4) aus einem zylindrischen Stangenmaterial gefertigt sind.

9. Wasserturbine nach Anspruch 1, dadurch gekennzeichnet, daß die Laufschaufeln (5) einstückig mit dem Läuferteil (3) gegossen sind.

10. Wasserturbine nach den Ansprüchen 1, 4, 8 und 9, dadurch gekennzeichnet, daß die Laufschaufeln (5) und die Leitschaufeln (4) mit einer Kunststoffschichte überzogen sind oder zur Gänze aus Kunststoff bestehen.

11. Wasserturbine nach den Ansprüchen 1, 4, und 8, dadurch gekennzeichnet, daß die Laufschaufeln (5) und die Leitschaufeln (4) sowie die Gehäuseteile (2) und die Läuferteile (3) als Schweiß- oder Lötkonstruktionen ausgeführt sind.

12. Wasserturbine nach Anspruch 1 bis 11, dadurch gekennzeichnet, daß der Läufer (6) und das Gehäuse (14) im Leitschaufelbereich sphärische und kegelige Ausbuchtungen (15, 16) des

0013907

Meridians zur Bildung eines gekrümmten Durchgangskanales aufweisen, wobei die spärischen Hüllflächen sich auf einer Seite der achsnormalen Ebene der Leitschaufeldrehachsen befinden.

13. Wasserturbine nach den Ansprüchen 1 und 12, dadurch gekennzeichnet, daß jeder Läuferteil (3) aus zwei getrennten, miteinander verbindbaren Abschnitten (17, 18) gebildet ist, wobei sich an einen zylindrischen, die Laufschaufeln (5) tragenden Abschnitt (17) der die bogenförmige Ausbuchtung (15) aufweisende Abschnitt (18) anschließt.

14. Wasserturbine nach den Ansprüchen 1 bis 13, dadurch gekennzeichnet, daß die Leitschaufeln (4) um eine radiale Achse verschwenkbar am Gehäuse (14) gehalten sind und die Leitschaufeln (4) aller Abschnitte (1) über achsparallele Zugstangen (19), die von einem einzigen Leitring (20) gemeinsam gesteuert werden, verstellbar sind.

Fig.3

Fig.4

Fig.1

0013907

1/4

Fig.5

Fig.7

Fig.9

Fig. 9a

Fig.8

20

20

19

1 2

22

2

12

Fig. 6a

4 5

Fig. 2

12 Fig. 6

2

5

2

4 3 5

5 13

2

3

Fig. 10

Fig. 11

Fig. 12

Fig. 13

0013907

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| A | DE - B - 1 227 406 (WHITTLE) <br> * Spalte 4, Zeilen 3-29 * <br><br> -- <br><br> DE - C - 336 143 (HONIG) <br> * Seite 1, Zeile 45 - Seite 2, Zeile 3 * <br><br> -- <br><br> DE - C - 712 638 (THEODOR BELL & CIE.) <br> * Seite 2, Zeilen 56-86 * <br><br> -- <br><br> FR - A - 903 563 (ESCHER WYSS) <br> * Seite 2, Zeilen 4-32 * <br><br> -- <br><br> AT - B - 319 868 (JELUSIC) <br> * Anspruch 1 * <br><br> -- <br><br> GB - A - 1 239 413 (DUPORT) <br> * Seite 2, Zeilen 110-114 * <br><br> ---- | 1 <br><br><br> 1 <br><br><br><br> 4,5,12 14 <br><br><br> 2,3,6 <br><br><br> 1 <br><br><br> 1 |

**KLASSIFIKATION DER ANMELDUNG (Int. Cl.)**

F 03 B 11/02
        3/04

**RECHERCHIERTE SACHGEBIETE (Int. Cl.)**

F 03 B

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 14-04-1980 | DE WINTER |

EPA form 1503.1  06.78